# EUROPÄISCHE PATENTSCHRIFT

(11) **EP 2 381 274 B1**
(45) Veröffentlichungstag und Bekanntmachung des Hinweises auf die Patenterteilung: **28.11.2012**
(21) Anmeldenummer: 10400027.8
(22) Anmeldetag: 26.04.2010
(51) Int. Cl.: G01V 1/20

(54) **Unterwasserantenne mit wenigstens einem Trägermodul sowie Verfahren zum Befestigen eines Wandlerelements auf derartigem Trägermodul**
Submersible antenna with at least one support module and method for fixing a converter element to such a support module
Antenne sous-marine avec au moins a module de support et procédé de fixation d'un élément convertisseur sur un tel module de support

(43) Veröffentlichungstag der Anmeldung: 26.10.2011
(73) Patentinhaber: ATLAS Elektronik GmbH, 28309 Bremen (DE)
(72) Erfinder: Minschke, Mike, 28832 Achim (DE)
(74) Vertreter: Wasiljeff, Johannes M.B.

(56) Entgegenhaltungen:
- EP-A2- 0 561 229
- WO-A1-93/03402
- WO-A2-88/04131
- DE-A1-102004 004 851
- DE-A1-102007 024 230
- GB-A- 2 429 062
- US-A1- 2006 225 948

## Beschreibung

Die Erfindung betrifft eine Unterwasserantenne mit wenigstens einem Trägermodul mit wenigstens einem Trägerelement, auf dem wenigstens ein Wandlerelement befestigt ist, sowie ein Verfahren zum Befestigen eines Wandlerelementes auf dem Trägermodul nach dem Oberbegriff des Anspruchs 1 bzw. 9.

In Peilanlagen in der Wasserschalltechnik wird eine Schleppantenne als Empfänger für Unterwasserschall eingesetzt. Sie wird von einem Schleppfahrzeug, z.B. einem Oberflächenschiff oder U-Boot, durch das Wasser gezogen und bei Nichtgebrauch auf einer bordfesten Trommel aufgewickelt.

Aus DE 42 08 178 A1 ist eine Schleppantenne aus mehreren mechanisch und elektrisch verbundenen Akustiksektionen bekannt, welche mit Zugseilen geschleppt wird und eine beträchtliche Länge haben kann. Formstücke in Längsrichtung sorgen für einen Abstand der Zugseile und eine Querstabilität der Schleppantenne. Sie sind in eine als elastischer Schlauch ausgebildeten Antennenhülle eingezogen, die mit einem Füllmittel gefüllt ist, um die Dichte der Schleppantenne der Dichte des Seewassers anzugleichen. Üblicherweise wird als Füllmittel Öl verwendet, dessen spezifische Dichte an die Dichte des Wassers innerhalb eines bevorzugten Einsatzgebietes der Schleppantenne angepasst ist.

Zwischen den Formstücken und/oder in den Formstücken sind Wandlerelemente, insbesondere Hydrophone, sowie Elektronikbausteine angeordnet, deren Verkabelung durch Bohrungen in den Formstücken geführt wird.

Die Formstücke dienen zur Formstabilisierung des Schlauches, der axial unverschieblichen Halterung der Wandlerelemente im Schlauch sowie zur Dämpfung der Flüssigkeitsströmung im Schlauch und damit zur Reduzierung von Störsignalen an den Wandlerelementen.

Die Wirksamkeit einer derartigen Schleppantenne wird vielfach durch Störgeräusche beeinträchtigt, welche die Nutzsignale teilweise überdecken. Störgeräusche können innerhalb der Wandlerelemente und dazugehörigen elektrischen Schaltungsteilen entstehen. Weitere Störquellen ergeben sich durch Vibrationen der Bauelemente innerhalb der Schleppantenne und durch mechanische Übertragung von Bewegung der Schleppantenne. Dabei stammt ein großer Teil der in die Schleppantenne gekoppelten Vibrationen von dem ziehenden Wasserfahrzeug und wird über die Zugseile auf die Akustiksektionen übertragen. Es können jedoch auch andere Vibrationsquellen vorliegen.

Herkömmlicherweise werden die Wandlerelemente beispielsweise durch Verkleben fest mit einem Träger verbunden, der das Wandlerelement in einer festen Position im Schlauch hält. Die sich über die Zugseile ausbreitenden Vibrationen gelangen als Körperschall an die Wandlerelemente. Bei fehlender Körperschallentkopplung kann von der starren Halterung Körperschall in das Wandlerelement gelangen und dort einen Schalldruck vortäuschen, der im Wasserschallfeld nicht vorhanden ist.

Aus DE 694 29 586 T2 ist bekannt, das Wandlerelement nachgiebig an den Träger zu binden. Dazu wird ein nichtfühlender (d.h. akustisch nicht wirksamer) Teil des Wandlerelementes an Weichgummiblöcken angebracht, die auf dem Träger befestigt sind. Dies hat jedoch den Nachteil, dass eine Verklebung direkt an einem Elastomer keine ausreichende Festigkeit bzw. Beständigkeit erreicht.

Alternativ kann eine Körperschallentkopplung durch hohen Fertigungsaufwand mittels komplizierter Gießformen und/oder aufwendiger Nachbearbeitung erreicht werden. Dies ist jedoch sehr kostenintensiv.

GB 2 429 062 A zeigt ein Hydrophon mit einem axial ausgerichteten Körper aus flexiblem Kunststoff zur Unterbringung in einem marineseismischen Messkabel. Dieser Körper weist eine Mehrzahl Kanäle bzw. Führungen auf und jede dieser Führungen weist eine oder mehrere Schächte zum Aufnehmen eines aktiven Elementes auf. Die aktiven Elemente des Hydrophons sind in jeder Führung radial positioniert, vorzugsweise in der Mitte des Körpers.

Die Befestigung des aktiven Elementes auf dem Körper des Hydrophons erfolgt über eine Montageplatte, die an den Enden jeweils einen Gummidichtring aufweist, um die Montageplatte unstarr auf den Körper zu montieren. Dazu wird die Montageplatte mit den Gummidichtringen in Backen eines Befestigungsträgers gesetzt und durch einen Satz Schrauben am Körper des Hydrophons gesichert.

WO 93/03402 A1 zeigt ein seismisches Messkabel, welches für marineseismische Messverfahren eingesetzt wird. Das Messkabel weist eine Mehrzahl von Drucksensoren, z.B. Hydrophone, und Bewegungssensoren, z.B. Geophone, auf und wird in einer vorgegebenen Tiefe durch das Meer oder andere Gewässer gezogen oder auf dem Gewässergrund versenkt.

Ein weiteres marineseismisches Messkabel, auch Streamer genannt, ist in EP 0 561 229 A2 genannt.

WO 88/04131 A2 zeigt ein Hydrophon-Array zum Empfang von Unterwasserschallsignalen.

US 2006/225948 A1 zeigt ein Verfahren zum Bestimmen der Tiefe eines Ölbrunnens oder Ölbohrlochs. Dazu wird ein kurzer, lauter Knall in das Bohrloch ausgesendet und das Echo aufgezeichnet.

Der Erfindung liegt nach alle dem das Problem zugrunde, eine kostengünstige Befestigung der Wandlerelemente auf einem Träger zu schaffen, die eine wirksame Körperschallentkopplung zur Verbesserung der akustischen Eigenschaften bietet.

Die Erfindung löst dieses Problem durch ein Trägermodul mit den Merkmalen des Anspruchs 1, durch die Merkmale eines entsprechenden Verfahrens zum Befestigen des Wandlerelementes auf dem Trägermodul gemäß Anspruch 9 sowie durch eine akustische Unterwasserantenne mit den Merkmalen des Anspruchs 10.

Die Erfindung stellt den Vorteil bereit, die, z.B. durch Zugseile, übertragenen Vibrationen des Trägermoduls von dem Wandlerelement zu entkoppeln. Dazu weist das Trägermodul wenigstens ein mit einer Durchbohrung versehenes Trägerelement auf, um das Wandlerelement aufzunehmen. In diese Durchbohrung wird eine als Elastomer ausgebildete Durchführungstülle eingesetzt, durch die eine Buchse geführt wird. Das Wandlerelement lässt sich somit über die Buchse elastisch auf dem Trägermodul befestigen, um die akustischen Eigenschaften der Antenne vorteilhaft zu verbessern. Ferner ist eine derartige Befestigung des Wandlerelementes preisgünstig, da auf Standardbauteile zurückgegriffen werden kann.

In einer bevorzugten Ausführungsform der Erfindung sind die Trägerelemente des Trägermoduls als flächenhafte Platten, insbesondere als Leiterplatten ausgebildet. Diese Leiterplatten lassen sich direkt mit Elektronikbaugruppen, welche eines oder mehrerer Wandlerelemente zugehörig sind, bestücken, wodurch vorteilhaft ein sehr kleiner Abstand zwischen den Wandlerelementen erreicht werden kann. Dies ermöglicht einen Empfang auch von hochfrequenten Schallsignalen. Ferner besitzen die Leiterplatten wenigstens eine Aussparung zur Befesti-gung von flexiblen Leiterbahnen. Dies ermöglicht vorteilhaft eine platzsparende Anordnung mehrerer Leiterplatten hintereinander, die durch die flexiblen Leiterbahnen elektrisch miteinander verbunden sind. Darüber hinaus ist die Form der Leiterplatten abhängig von der Verwendung des Trägermoduls. Gemäß einer Ausführungsform der Erfindung als Schleppantenne sind die Leiterplatten vorteilhafterweise im Wesentlichen kreisrund, um eine Unterbringung in einem Schlauch zu ermöglichen. Es sind jedoch weitere Formen der Leiterplatten denkbar, beispielsweise im Wesentlichen rund, jedoch oben und unten abgeflacht. Dies ermöglicht eine Unterbringung der Zugseile und/oder elektrischen Leitung oberhalb und unterhalb der Leiterplatte. Ebenso werden bei einer derartigen Ausgestaltung die mechanischen Beanspruchungen der formfesten Teile beim Aufrollen der Schleppantenne bei Nichtgebrauch verringert.

In einer weiteren bevorzugten Ausführungsform der Erfindung werden die Leiterplatten des Trägermoduls in Formstücke eingepasst, in denen die Zugseile der Schleppantenne in geeigneter Weise befestigt sind. Dies hat den Vorteil, dass die Wandlerelemente geschützt sind und der Schlauch der Schleppantenne die gewünschte Stabilität erhält.

In einer weiteren Ausführungsform der Erfindung sind die Buchse und die als Elastomer ausgebildete Durchführungstülle aus ölbeständigem Material ausgebildet. Dies hat den Vorteil einer höheren Lebensdauer, da der Schlauch einer Schleppantenne vorzugsweise mit Öl gefüllt ist, um die Dichte der Schleppantenne der Dichte des Seewassers anzugleichen.

In einer weiteren bevorzugten Ausführungsform der Erfindung wird das Wandlerelement mittels einer Vergussmasse in die Buchse eingeklebt. Dazu wird vorteilhafterweise ein nichtfühlender (d.h. akustisch nicht wirksamer) Teil des Wandlerelementes, vorzugsweise ein Fortsatz oder die Leiterausführung, in die Buchse eingeführt. Die Fase der Buchse, auf der von dem Wandlerelement abgewandten Seite, wird ebenfalls mit der Vergussmasse ausgefüllt, wobei die Vergussmasse vorzugsweise ein Gießharz ist. Ein derartiges Einkleben des Wandlerelementes in der Buchse liefert vorteilhaft eine hohe Festigkeit.

Gemäß einer weiteren Ausführungsform der Erfindung ist die Buchse zylinderförmig ausgebildet, wobei ein Zylinderende einen größeren Durchmesser aufweist als das andere. Dies verhindert ein Durchrutschen der Buchse beim Einführen in die Bohrung der Durchführungstülle. Die Maße der Buchse sind durch die Maße der Bohrung der Durchführungstülle vorgegeben. Gemäß weiteren Ausführungsformen sind jedoch weitere Formen bei der Ausgestaltung der Buchse denkbar. Beispielsweise asymmetrische Formen, um eine Vorzugsrichtung beim Einsetzen des Wandlerelementes vorzugeben. Dies ist vorteilhaft bei der Verwendung von Wandlerelementen mit Richtfunktion, um ein Verwechseln der Richtung beim Einsetzen auszuschließen.

In einer weiteren Ausführungsform der Erfindung ist eine Befestigung des Wandlerelementes, insbesondere eines kugelförmigen Wandlerelementes, an dessen Leiterausführung möglich. Dazu werden die Leiter des Wandlerelementes durch die Bohrung der Buchse in das Trägermodul durchgeführt. Dies hat den Vorteil, dass kein zusätzlicher Fortsatz am Wandlerelement zur Befestigung notwendig ist. Erfordert es die Bauart jedoch, dass die Leitungen des Wandlerelementes seitlich am Trägerelement des Trägermoduls geführt werden sollen, so ist ebenso eine Befestigung über einen zusätzlichen Fortsatz am Wandlerelement möglich.

In einer weiteren bevorzugten Ausführungsform der Erfindung weist die zylinderförmige Durchführungstülle an den äußeren Seiten jeweils einen Kragen und mittig eine im Wesentlichen der Größe der Durchbohrung des Trägermoduls entsprechende, umfangseitig konzentrische Passnut auf. Die Passnut wird derart in die Durchbohrung des Trägermoduls eingepasst, dass beidseitig der Bohrung jeweils ein Kragen der Durchführungstülle elastisch und formschlüssig anliegt. Ein genauer Sitz der Durchführungstülle sowie ein Formschluss der Komponenten von Trägermodul und Durchführungstülle sind die Vorteile einer derartigen Ausgestaltung.

In einer weiteren Ausführungsform der Erfindung weisen die Trägerelemente des Trägermoduls zur Aufnahme eines Zugseils und/oder elektrischen Leitungen eine im Wesentlichen mittige Bohrung auf. Um die Bohrung zugänglich zu machen, weist das Trägermodul ferner einen Längsschlitz parallel zur Achse des Trägermoduls über die Länge des Trägermoduls auf. Dadurch ist vorteilhaft ein Einhängen des Zugseils in das Trägermodul möglich. Entspricht der Durchmesser der Bohrung dem Durchmessers des Zugseils, so ist das Trägermodul an dem Zugseil fixiert. Um ein Herausrutschen des Zugseils bzw. der elektrischen Leitung zu verhindern, ist der Durchmesser des Längsschlitzes kleiner als der Durchmesser der Bohrung.

In einer weiteren Ausführungsform der Erfindung weist das Trägermodul wenigstens zwei Trägerelemente bzw. Leiterplatten auf, welche auf ihrer jeweiligen nach außen weisenden Oberfläche jeweils ein elektroakustisches und/oder optoakustisches Wandlerelement aufweisen. Diese Anordnung benötigt wenig Platz. Bei einer längsseitigen, hintereinander liegenden Anordnung derartiger Trägermodule im Schlauch einer Schleppantenne, lässt sich diese vorteilhaft mit einem geringem Gewicht und geringem Durchmesser ausbilden. Ferner besteht durch die geringen Abmessungen eines derartigen Trägermoduls die Möglichkeit dieses beispielsweise quer im Schlauch anzuordnen, um vorteilhaft eine Richtungsbildung beim Empfang der Schallsignale zu ermöglichen.

In einer alternativen Ausführungsform der Erfindung weist das Trägermodul wenigstens zwei Trägerelemente bzw. Leiterplatten auf, auf deren jeweiligen nach außen weisenden Oberflächen jeweils drei Wandlerelemente in einem jeweils gleichen Radialabstand zur Trägermodulachse und jeweils gleichem Abstand zueinander angeordnet sind, die zu einem Wandler zusammengefasst sind. Es werden die Ausgangssignale von je zwei der drei Wandlerelemente unter Berücksichtung der zugehörigen Zeitverzögerungskoeffizienten in bekannter Weise zu einem Ausgangssignal des Wandlers zusammengefasst. Die Richtcharakteristiken aller derart gebildeten Ausgangssignale aller Wandler der Schleppantenne weisen mit ihren Hauptempfangsrichtungen jeweils zu einer Seite der Schleppantenne. In DE 31 51 028 A1 ist die signaltechnische Zusammenfassung der Ausgangssignale der drei Wandlerelemente beispielhaft beschrieben.

Weitere vorteilhafte Ausführungsformen der Erfindung ergeben sich aus den Unteransprüchen sowie aus den anhand der anliegenden Zeichnung näher erläuterten Ausführungsbeispielen. In der Zeichnung zeigen:
- Fig. 1: eine schematische Darstellung einer von einem Überwasserschiff gezogenen Schleppantenne,
- Fig. 2: eine schematische Darstellung eines Ausschnittes einer Akustiksektion einer Schleppantenne mit einem Formstück,
- Fig. 3A-B: eine schematische Darstellung eines Trägermoduls einer Unterwasserantenne mit Wandlerelementen als einzelne Anordnung,
- Fig. 4: ein Blockschaltbild der Verfahrensschritte zum Befestigen eines Wandlerelementes auf einem Trägermodul,
- Fig. 5A-B: eine schematische Darstellung eines Trägermoduls mit drei Wandlerelementen als Dreier-Anordnung.

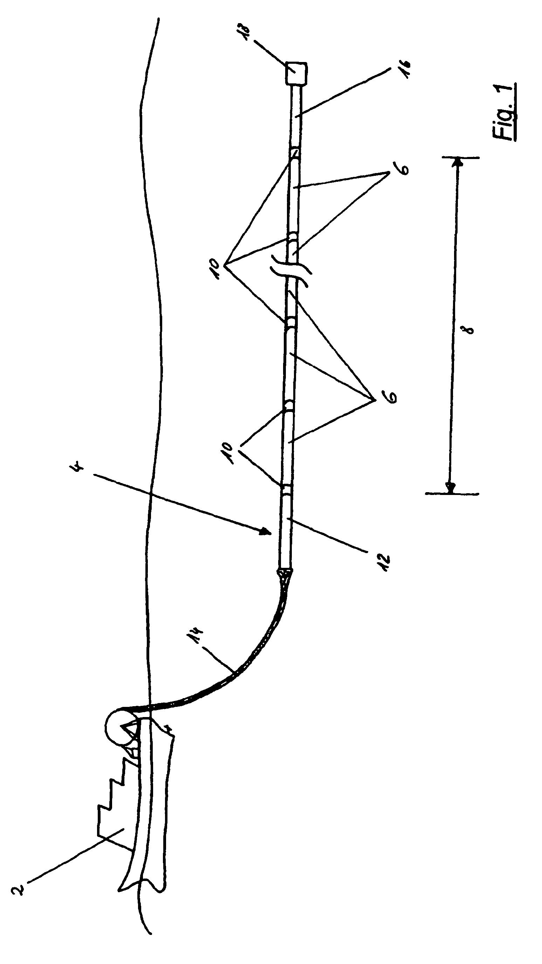

Fig. 1 zeigt schematisch eine von einem Wasserfahrzeug 2 gezogene Schleppantenne 4. Die Schleppantenne 4 ist zusammengesetzt aus einer Vielzahl von Akustiksektionen 6, die zusammen den Akustikteil 8 der Schleppantenne 4 bilden. Die Akustiksektionen 6 sind über Kupplungen bzw. Verbinder 10 lösbar miteinander verbunden und alle identisch aufgebaut. Der Akustikteil 8 der Schleppantenne 4 ist über ein Dämpfungsmodul 12 an einem Schleppkabel 14 befestigt und somit letztlich mit dem ziehenden Wasserfahrzeug 2. Am freien Ende der Schleppantenne 4 befindet sich ein weiteres Dämpfungsmodul 16 sowie eine Schleppbremse 18 zum Erzeugen einer der Schlepprichtung entgegenwirkenden Zugkraft, um die Schleppantenne 4 möglichst gestreckt zu halten. Die Dämpfungsmodule 12, 16 dienen der mechanischen Schwingungsentkopplung der Schleppantenne 4.

Das Wasserfahrzeug 2 ist bevorzugt ein Überwasserschiff oder ein Unterwasserfahrzeug, insbesondere ein U-Boot.

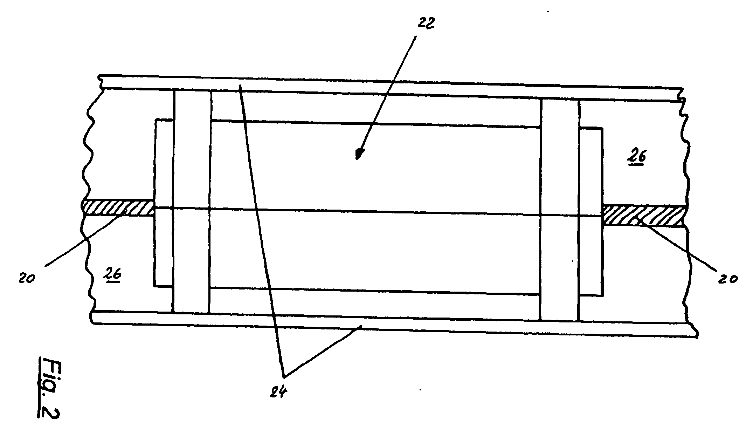

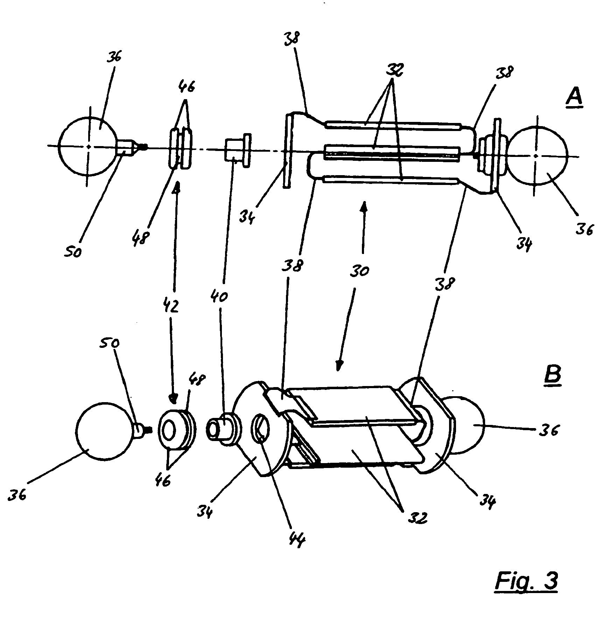

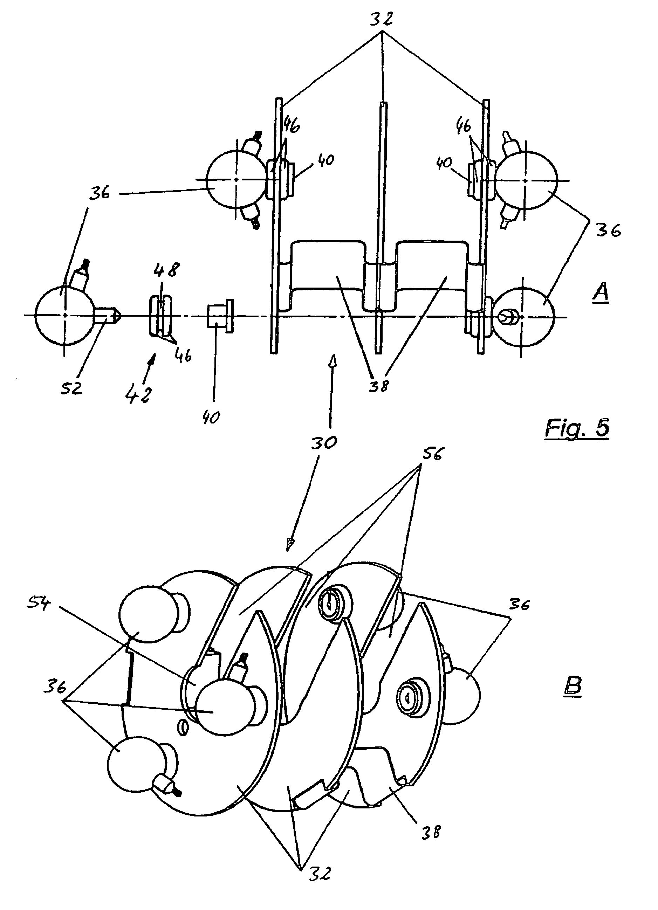

In Fig. 2 ist schematisch ein Ausschnitt einer Akustiksektion 6 dargestellt. Es zeigt beispielhaft mittels eines axialen Schnittes einen sog. Skelett, bestehend aus Zugseil 20, beispielsweise einem Stahlseil, und Formstück 22. Die Formstücke 22 sind axial unverschieblich, in wählbaren Abständen an dem Zugseil 20 festgelegt, welches von Kupplung 10 zu Kupplung 10 durch die Länge der Schleppantenne 4 durch die Formstücke 22 hindurchgeführt ist. In einer Akustiksektion 6 sind vorzugsweise mehrere Formstücke 22 beabstandet untergebracht. Das Skelett wird zum Schutz gegen Seewasser in einen elastischen, zugfesten, beispielsweise aus Polyurethan mit eingelegten Kohlefasern oder Kevlarfasem bestehenden Schlauch 24 eingezogen. Dazu weisen die Formstücke 22 einen geringfügig kleineren Außendurchmesser als der Innendurchmesser des Schlauches 24 auf. Sie sorgen somit für eine entsprechende Formstabilität des Schlauches 24. Der Schlauch 24 ist an den Kupplungen 10 verschlossen und mit einer elektrisch isolierenden Substanz 26, beispielsweise Gel oder **Öl,** gefüllt. Das Formstück 22 dient ferner zur Unterbringung eines beispielhaft in Fig. 3A-B oder Fig. 5A-B detailliert dargestellten Trägermoduls 30 und ist vorzugsweise als Gehäuse ausgebildet.

Fig. 3A-B zeigen beispielhaft ein Trägermodul 30 als einzelne Anordnung. Fig. 3A zeigt einen Längsschnitt durch das Trägermodul 30 und Fig. 3B eine perspektivische Darstellung des Trägermoduls 30.

Das Trägermodul 30 weist mehrere mit Elektronikbauteilen bestückbare Leiterplatten 32 auf, die längs der Modulachse ausgerichtet sind. Quer zur Modulachse sind zwei bevorzugt ebenfalls als Leiterplatten ausgebildete Trägerelemente 34 vorgesehen, deren nach außen weisenden Oberflächen jeweils ein Wandlerelement 36 tragen. Die bestückten Leiterplatten 32 bilden der Wandlerelemente 36 zugehörige Elektronikbaugruppen, die das Ausgangssignal des Wandlerelementes 36 liefern. Dabei ist das Wandlerelement 36 in bekannter Weise über den in Fig. 3A-B nur angedeuteten elektrischen Anschluss der Leiter an die Elektronik angeschlossen. Die Leiterplatten 32 sind durch ein Band mit flexiblen Leiterbahnverbindungen 38 mechanisch und elektrisch verbunden.

In diesem Ausführungsbeispiel besitzen die Wandlerelemente 36 die Form einer Kugel. Die Erfindung ist jedoch nicht auf derartige Piezokeramikkugeln beschränkt. Ferner können als Wandlerelemente 36 eine Reihe von piezoelektrischen Keramiken, piezoelektrischen Polymeren und faseroptischen Wandlern eingesetzt werden.

Die Befestigung des Wandlerelementes 36 auf dem Trägermodul 30 erfolgt mittels einer Buchse 40 sowie einer elastischen Durchführungstülle 42 entsprechend dem erfindungsgemäßen Verfahren durch ein axiales Loch 44 im Trägermodul 30. Bei einem derartigen Aufbau ist das Wandlerelement 36 von einer, z.B. durch Vibrationen induzierten, Belastung von dem Trägermodul 30 entkoppelt.

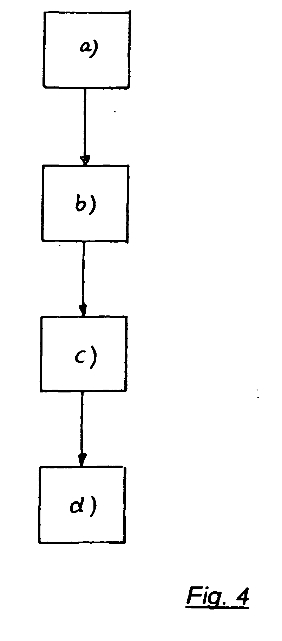

Fig. 4 zeigt ein Blockschaltbild der Verfahrensschritte zum Befestigen eines Wandlerelementes 36 auf einem Trägermodul 30 entsprechend der Anordnung in Fig. 3.

Zunächst wird in Schritt a) in eine dafür vorgesehene Bohrung 44 im Trägermodul die als Elastomer ausgebildete Durchführungstülle 42 eingesetzt. Die Durchführungstülle 42 ist vorzugsweise aus paraffinölbeständigem Gummi ausgebildet. Aufgrund der sich zwischen den zwei Kragen 46 befindende Passnut 48 sitzt die Durchführungstülle 42 formschlüssig in der Bohrung 44, wobei die Kragen 46 beidseitig an dem Trägermodul 30 anliegen.

Gemäß Schritt b) wird die Buchse 40 in die Bohrung der Durchführungstülle 42 eingesetzt. In diesem Ausführungsbeispiel handelt es sich um eine zylinderförmige Buchse 40 mit auf einer Seite größerem Durchmesser. Dadurch wird verhindert, dass die Buchse 40 beim Einsetzten durch die Durchführungstülle 42 rutscht. Die Erfindung ist jedoch nicht auf zylinderförmige Buchsen 40 beschränkt. Vielmehr sind je nach Anwendung beliebige Formen der Buchsen 40 denkbar.

Anschließend wird in Schritt c) das Wandlerelement 36 in die Buchse 40 eingesetzt. In diesem Ausführungsbeispiel wird das Wandlerelement 36 mit der Leiterausführung 50 durch die Buchse 40 geführt. Die aus Kupfer oder Lichtleitfasern bestehenden Strom- und Signalleitungen der Wandlerelemente 36 werden durch die Bohrung der Durchführungstülle 43 geführt, sind jedoch hier nicht weiter dargestellt. Die Fixierung des Wandlerelementes 36 in der Buchse 40 erfolgt mittels einer Vergussmasse, vorzugsweise Gießharz.

Zuletzt wird in Schritt d) die Fase der Buchse 40 auf der vom Wandlerelement 36 abgewandten Seite ebenfalls mit der Vergussmasse aufgefüllt.

In einer alternativen Ausführungsform gemäß Fig. 5A-B des Trägermoduls 30 sind die Wandlerelemente 36 nicht wie bei der einzelnen Anordnung gemäß Fig. 3A-B in der Längsachse platziert, sondern in einem Radialabstand von der Längsachse auf den beiden äußeren Trägerelemente 34. Dabei zeigt Fig. 5A einen Längsschnitt durch das Trägermodul 30 und Fig. 5B eine perspektivische Ansicht des Trägermoduls 30.

Das Trägermodul 30 weist mindestens eine, bevorzugt jedoch zwei oder drei oder mehr als drei vorzugsweise, jedoch nicht notwendigerweise mit Elektronikbauteilen bestückbare Leiterplatten 32 auf, die quer zur Modulachse oder in anderer Weise ausgerichtet sind und auf nach außen weisende Plattenflächen jeweils drei Wandlerelemente 36 tragen. Die drei auf einer Plattenfläche befindlichen Wandlerelemente 36 werden zu jeweils einem Wandler zusammengefasst. Dabei werden die Ausgangssignale von je zwei der drei Wandlerelemente 36 unter Berücksichtigung der zugehörigen Zeitverzögerungskoeffizienten in bekannter Weise zu einem Ausgangssignal des Wandlers zusammengefasst. Die bestückten Leiterplatten 32 bilden diesem Wandler zugehörige Elektronikbaugruppen, die die Ausgangssignale der Wandlerelemente 36 liefern. Sie sind durch ein Band mit flexiblen Leiterbahnverbindungen 38 mechanisch und elektrisch verbunden. Alternativ sind die genannten Elektronikbaugruppen außerhalb des Trägermoduls, insbesondere beabstandet vom Trägermodul, angeordnet. Die Richtcharakteristiken aller derart gebildeten Ausgangssignale aller Wandler weisen mit ihren Hauptempfangsrichtungen jeweils zu einer Seite der Schleppantenne 4. Dies ermöglicht bei einer Peilung eines Zieles eine eindeutige Unterscheidung zwischen Backbord- oder Steuerbordlage des Zieles. Die zugehörige Signalverarbeitung ist in DE 31 51 028 A1 beschrieben.

Die Montage der Wandlerelemente 36 auf dem Trägermodul 30 erfolgt auf gleicher Weise wie bei der einzelnen Anordnung gemäß Fig. 3A-B. Zunächst wird die elastische Durchführungstülle 42 in eine dafür vorgesehene Durchbohrung 44 in dem Trägermodul 30 eingesetzt. Eine mittig befindliche Passnut 48 sowie zwei außen befindliche Kragen 46 der Durchführungstülle 42 sorgen für einen formschlüssigen Sitz der Durchführungstülle 42 in der Bohrung 44 in dem Trägermodul 30.

Durch die Durchführungstülle 42 wird in einem nächsten Verarbeitungsschritt die Buchse 40 eingesetzt. Anschließend wird in die Buchse 40 das Wandlerelement 36 geklebt. In diesem Aufführungsbeispiel werden die Wandlerelemente 36 mittels eines nichtfühlenden Fortsatzes 52 in die Buchse 40 eingeklebt. Dies ermöglicht eine seitliche Führung der Leitungen der Wandlerelemente 36 an dem Trägermodul 30. Die Fixierung des Wandlerelementes 36 in der Buchse 40 erfolgt mittels einer Vergussmasse, vorzugsweise eines Gießharzes. Zuletzt wird die Fase der Buchse 40 auf der vom Wandlerelement 36 abgewandten Seite ebenfalls mit der Vergussmasse aufgefüllt.

Die Leiterplatten 32 des Trägermoduls 30 weisen eine im Wesentlichen mittige Bohrung 54 auf, zur Aufnahme eines Zugseils 20 und/oder elektrischen Leitungen. Um die Bohrung 54 zugänglich zu machen, weist das Trägermodul 30 ferner einen Längsschlitz 56 parallel zur Achse des Trägermoduls 30 über die Länge des Trägermoduls 30 auf. Eine derartige "Hufeisen"-Form des Trägermoduls 30 kann leicht über das Zugseil 20 einer Schleppantenne 4 geschoben werden. Um ein Herausrutschen des Zugseils 20 bzw. der elektrischen Leitungen zu verhindern, ist der Durchmesser des Längsschlitzes 56 geringfügig kleiner als der Durchmesser der Bohrung 54.

Aus Gründen der Einfachheit ist das Prinzip der Erfindung anhand einer Schleppantenne 4 mit einem zentralen Zugseil 20 und unter Weglassen der nötigen Vorrichtungen und Gegenständen für die Telemetrie und Steuerung erläutert. Ferner ist es möglich, mehrere Zugseile 20 zu verwenden. Ebenso die Zahl der bestückten Leiterplatten 32 des Trägermoduls 30 sowie die Anzahl der Wandlerelemente 36 können je nach Anwendung variieren. Auch alternative Ausführungsformen der Antenne sind denkbar, z.B. eine Vertikalantenne zum Absenken auf den Meeresboden. Das Prinzip der Befestigung des Wandlerelementes auf dem Trägermodul bleibt dabei erhalten.

## Patentansprüche

1. Unterwasserantenne mit wenigstens einem Trägermodul (30) mit wenigstens einem Trägerelement (34), welches wenigstens ein elektroakustisches und/oder optoakustisches Wandlerelement (36) aufweist,
**dadurch gekennzeichnet, dass**
das wenigstens eine Wandlerelement (36) mittels einer Buchse (40) sowie einer Durchführungstülle (42), welche in einer dafür vorgesehenen Bohrung (44) im Trägermodul (30) eingesetzt ist, elastisch auf dem Trägermodul (30) befestigt ist.

2. Unterwasserantenne nach Anspruch 1,
**dadurch gekennzeichnet, dass**
die Trägerelemente (34) als Leiterplatten (32) ausgebildet sind, auf denen Elektronikbauteile angebracht sind.

3. Unterwasserantenne nach Anspruch 1 oder 2,
**dadurch gekennzeichnet, dass**
die Buchse (40) und die Durchführungstülle (42) aus ölbeständigem Material ausgebildet sind.

4. Unterwasserantenne nach einem der vorhergehenden Ansprüche,
**dadurch gekennzeichnet, dass**
das Wandlerelement (36) mittels einer Vergussmasse in die Buchse (40) eingeklebt ist und die Buchse (40) auf der vom Wandlerelement (36) abgewandten Seite mittels der Vergussmasse aufgefüllt ist.

5. Unterwasserantenne nach einem der vorhergehenden Ansprüche,
**dadurch gekennzeichnet, dass**
die Buchse (40) zylinderförmig ausgebildet ist, wobei ein Zylinderende einen größeren Durchmesser aufweist.

6. Unterwasserantenne nach einem der vorhergehenden Ansprüche,
**dadurch gekennzeichnet, dass**
die Befestigung des Wandlerelementes (36) an dessen Leiterausführung (50) möglich ist, indem die Leiter des Wandlerelementes (36) durch die Bohrung der Buchse (40) in das Trägermodul (30) durchgeführt werden.

7. Unterwasserantenne nach einem der vorhergehenden Ansprüche,
**dadurch gekennzeichnet, dass**
die Durchführungstülle (42) an den äußeren Seiten jeweils einen Kragen (46) und mittig eine im Wesentlichen der Größe der Bohrung (44) des Trägermoduls (30) entsprechende, umfangseitig konzentrische Passnut (48) aufweist, welche derart in die Bohrung (44) des Trägermoduls (30) eingepasst ist, dass beidseitig der Bohrung (44) jeweils ein Kragen (46) der Durchführungstülle (42) elastisch und formschlüssig anliegt.

8. Unterwasserantenne nach einem der vorhergehenden Ansprüche,
**dadurch gekennzeichnet, dass**
die Trägerelemente (34) eine weitere Bohrung (54) zur Aufnahme eines Zugseils (20) und/oder elektrischen Leitung aufweisen, mit einem dieser weiteren Bohrung (54) zugänglichen Längsschlitz (56) parallel zur Achse des Trägermoduls (30) über die Länge des Trägermoduls (30), wobei der Durchmesser des Längsschlitzes (56) kleiner als der Durchmesser dieser weiteren Bohrung (54) ist.

9. Verfahren zum Befestigen eines Wandlerelementes (36) auf einem Trägermodul (30) einer Unterwasserantenne nach einem der vorhergehenden Ansprüche, wobei das Trägermodul (30) wenigstens ein Trägerelement (34) aufweist, welches wenigstens ein elektroakustisches und/oder optoakustische Wandlerelement (36) aufweist, wobei das Verfahren folgende Schritte aufweist:
a) Einsetzen einer Durchführungstülle (42) in eine dafür vorgesehene Bohrung (44) in dem Trägermodul (30),
b) Einsetzen einer Buchse (40) in die Bohrung der Durchführungstülle (42) und
c) elastisches Befestigen des Wandlerelementes (36) mittels der Buchse (40) auf dem Trägermodul (30).

10. Verfahren nach Anspruch 9,
**dadurch gekennzeichnet, dass**
das Verfahren zum Befestigen eines Wandlerelementes (36) auf einem Trägermodul (30) folgende weitere Schritte aufweist:
d) Einkleben des Wandlerelementes (36) in die Buchse (40) mittels einer Vergussmasse,
e) Auffüllen der Buchse (40) auf der von dem Wandlerelemente (36) abgewandten Seite mit Vergussmasse.

## Claims

1. Submersible antenna having at least one supporting module (30) with at least one supporting element (34), which comprises at least one electro-acoustic and, or opto-acoustic transducer element (36), **characterised in that** at least one transducer element (36) is elastically attached to the supporting module (30) by means of a bush (40) and a grommet (42), which is inserted into a bore (44) provided for the grommet (42) in the supporting module (30).

2. Submersible antenna according to Claim 1, **characterised in that** the supporting elements (34) are in the form of circuit boards (32), on which electronic components are mounted.

3. Submersible antenna according to Claim 1 or 2, **characterised in that** the bush (40) and the grommet (42) are made of oil-resistant material.

4. Submersible antenna according to any one of the preceding claims, **characterised in that** the transducer element (36) is stuck into the bush (40) with a casting material and the bush (40) is filled with the casting material on the side facing away from the transducer element (36).

5. Submersible antenna according to any one of the preceding claims, **characterised in that** the bush (40) is cylindrical, wherein one end of the cylinder has a larger diameter.

6. Submersible antenna according to any one of the preceding claims, **characterised in that** the attachment of the transducer element (36) to its conductor lead-out (50) is possible by feeding the conductor of the transducer element (36) through the bore of the bush (40) into the supporting module (30).

7. Submersible antenna according to any one of the preceding claims, **characterised in that** the grommet (42) comprises a collar (46) on each outer side and in the centre a circumferentially concentric fitting groove (48) essentially corresponding to the size of the bore (44) of the supporting module (30), which is fitted into the bore (44) of the supporting module (30) in such a way that a collar (46) of said grommet (42) abuts on both sides of the bore (44) in an elastic and shape-locking manner.

8. Submersible antenna according to any one of the preceding claims, **characterised in that** the supporting elements (34) comprise another bore (54) for receiving a pull chord (20) and/or an electric cable, with an oblong slot (56) accessible to this further bore (54) parallel to the axis of the supporting module (30) over the length of the supporting module (30), wherein the diameter of the oblong slot (56) is less than the diameter of this further bore (54).

9. Method of attaching a transducer element (36) to a supporting module (30) of a submersible antenna according to any one of the preceding claims, wherein the supporting module (30) comprises at least one supporting element (34), which comprises at least one electro-acoustic and/or opto-acoustic transducer element (36), wherein the method comprises the following steps:
a) inserting a grommet (42) into a bore (44) in the supporting module (30) provided for the grommet (42),
b) inserting a bush (40) into the bore of the grommet (42) and
c) elastically attaching the transducer element (36) by means of the bush (40) to the supporting module (30).

10. Method according to Claim 9, **characterised in that** the method for attaching a transducer element (36) to a supporting module (30) comprises the following further steps:
d) sticking the transducer element (36) in the bush (40) by means of a casting material,
e) filling the bush (40) with casting material on the side facing away from the transducer element (36).

## Revendications

1. Antenne immergée comportant au moins un module de support (30) comportant au moins un élément de support (34) qui comprend au moins un élément transducteur électro-acoustique et/ou opte-acoustique (36),
**caractérisée en ce que** l'au moins un élément transducteur (36) est fixé élastiquement sur le module de support (30) au moyen d'une douille (40) et d'un passe-câble (42) qui est introduit dans un alésage (44) prévu pour le passe-câble (42) dans le module de support (30).

2. Antenne immergée selon la revendications 1, **caractérisée en ce que** les éléments de support (34) sont réalisés sous la forme de cartes de circuits imprimés (32) sur lesquelles sont montée des composants électroniques.

3. Antenne immergée selon la revendication 1 ou 2, **caractérisée en ce que** la douille (40) et le passe-câble (42) sont constitués d'un matériau résistant à l'huile.

4. Antenne immergée selon l'une quelconque des revendications précédentes, **caractérisée en ce que** l'élément transducteur (36) est collé dans la douille (40) au moyen d'une masse de scellement et **en ce que** la douille (40) est remplie de la masse de scellement jusqu'au côté opposé à l'élément transducteur (36).

5. Antenne immergée selon l'une quelconque des revendications précédentes, **caractérisée en ce que** la douille (40) est de forme cylindrique, une extrémité du cylindre présentant un diamètre supérieur.

6. Antenne immergée selon l'une quelconque des revendications précédentes, **caractérisée en ce que** la fixation de l'élément transducteur (36) à son type de conducteur (50) est possible en raison du fait que les conducteurs de l'élément transducteur (36) sont acheminés à travers l'alésage de la douille (40) dans le module de support (30).

7. Antenne immergée selon l'une quelconque des revendications précédentes, **caractérisée en ce que** le passe-câble (42) présente à chaque fois sur les faces extérieures une collerette (46) et **en ce qu'**il présente à une position centrale une rainure le passage (48) périphérique concentrique correspondant sensiblement à la taille de l'alésage (44) du module de support (30), celle-ci étant emboîtée dans l'alésage (44) du module du support (30) de telle manière qu'une collerette (46) respective du passe-câble (42) soit ajustée de manière élastique et adaptée à la forme des deux côtés de l'alésage (44).

8. Antenne immergée selon l'une quelconque des revendications précédentes, **caractérisée en ce que** les éléments de support (34) présentent un alésage supplémentaire (54) destiné à recevoir un câble de traction (20) et/ou une ligne électrique, comprenant une fente longitudinale (56) accessible à cet alésage supplémentaire (54) parallèlement à l'axe du module de support (30) sur la longueur du module de support (30), dans laquelle le diamètre de la fente longitudinale (56) est inférieur au diamètre de cet alésage supplémentaire (54).

9. Procédé de fixation d'un élément transducteur (36) à un module de support (30) d'une antenne immergée selon l'une quelconque des revendications précédentes, dans lequel le module de support (30) comprend au moins un élément de support (34) qui comprend au moins un élément transducteur électroacoustique et/ou opto-acoustique (36), dans lequel le procédé comprend les étapes suivantes :
a) introduire un passe-câble (42) dans un alésage (44) prévu pour le passe-câble (42) dans le module de support (30),
b) introduire une douille (40) dans l'alésage du passe-câble (42) et
c) fixer de manière élastique l'élément transducteur (36) au moyen de la douille (40) sur le module de support (30).

10. Procédé selon la revendication 9, **caractérisé en ce que** le procédé de fixation d'un élément transducteur (36) sur un module de support (30) comprend les étapes supplémentaires suivantes :
d) coller l'élément transducteur (36) dans la douille (40) au moyen d'une masse de scellement,
e) remplir la douille (40) d'une masse le scellement jusqu'au côté opposé à l'élément transducteur (36).
